## Europäisches Patentamt

## European Patent Office

## Office européen des brevets

(19)

(11) Veröffentlichungsnummer: **0 177 724**
B1

(12)

# EUROPÄISCHE PATENTSCHRIFT

(45) Veröffentlichungstag der Patentschrift:
**17.11.88**

(51) Int. Cl.⁴: **H 05 B 3/26**, G 01 N 21/35

(21) Anmeldenummer: **85110502.3**

(22) Anmeldetag: **21.08.85**

(54) **Infrarot-Strahler.**

(30) Priorität: **12.10.84 DE 3437397**

(43) Veröffentlichungstag der Anmeldung:
**16.04.86 Patentblatt 86/16**

(45) Bekanntmachung des Hinweises auf die Patenterteilung:
**17.11.88 Patentblatt 88/46**

(84) Benannte Vertragsstaaten:
**DE FR GB SE**

(56) Entgegenhaltungen:
**US - A - 3 875 413**

(73) Patentinhaber: **Drägerwerk Aktiengesellschaft, Moislinger Allee 53-55, D-2400 Lübeck 1 (DE)**

(72) Erfinder: **Hagen, Werner, Dr. Dipl.-Phys., Hirtenweg 12, D-2407 Bad Schwartau (DE)**
Erfinder: **Lagois, Johannes, Dr. Dr. habil. Dipl.-Phys., Schönbökener Strasse 37, D-2400 Lübeck (DE)**
Erfinder: **Pruss, Dieter, Dr., Saselbergweg 30, D-2000 Hamburg 65 (DE)**

# Beschreibung

Die Erfindung betrifft eine Strahlungsquelle für Infrarot-Strahlung mit einem Flächenstrahler, welcher auf einem Trägersubstrat aufgebracht ist, und mit einer elektrisch leitfähigen Widerstandsschicht, welche als Heizelement auf dem Trägersubstrat angebracht ist.

Aus der US-PS 38 75 413 ist ein Infrarot-Strahler bekannt, bei dem die Strahlungsquelle als dünner Film auf einem Träger ausgebildet ist. Der Film wird als Heizwiderstand 13 unmittelbar als Strahler benutzt. Der Träger besteht aus einem Material geringer Wärmeleitung, wie Quarz oder Saphir. Im zentralen Bereich des Trägers 11 ist eine flächenförmige Strahlungsquelle 13 angeordnet, welche mit einem Material von hohem elektrischen Widerstand und hohem optischen Emissionsvermögen bedampft ist und den Heizwiderstand bildet. Er ist zugleich die Strahlungsquelle. Die in Längsrichtung sich anschliessenden Endstücke der aufgedampften Strahlungsquelle sind mit Kontaktbelägen aus Platin bedeckt, welche die Anschlussdrähte tragen und die Ränder des Heizwiderstandes überdecken. Aufgrund des geringen Emissionsvermögens von Platin tragen die Kontaktbeläge nicht zur Strahlung bei; diese ist auf die Fläche des Heizwiderstandes beschränkt.

Einen bedeutenden Anwendungsbereich solche Infrarot-Strahlungsquellen bilden Gasanalysen-Geräte, welche unter Ausnutzung der Infrarot-Absorption die verschiedenen Bestandteile eines zu prüfenden Gasgemisches unterscheiden und messen können.

Bei der optischen Gasanalyse wird mit einem modulierten Strahl gearbeitet, um eine einfache Trennung des modulierten Nutzsignals vom niederfrequenten Rauschen zu ermöglichen. Werden kontinuierlich leuchtende Strahlungsquellen verwendet, muss die Strahlung durch einen mechanischen Zerhacker, wie z.B. einen rotierenden Spiegel oder rotierende Blenden, moduliert werden. Solche mechanischen Lösungen sind aufwendig, müssen genau aufeinander abgestimmt sein und sind wegen ihrer empfindlichen Bauform für transportable oder tragbare Gasanalysengeräte nicht geeignet. Man ist daher bestrebt, die Modulation des optischen Strahles durch eine direkte Modulation der Strahlungsquellenintensität zu verwirklichen. Dazu ist jedoch eine wesentliche Voraussetzung, dass die Strahlungsquelle eine möglichst geringe Wärmekapazität aufweist und dass die Wärmeabfuhr rasch an die Umgebung erfolgt.

Die bekannten Infrarot-Strahlungsquellen in Form von dünnen Metallschichten auf Keramiksubstraten besitzen jedoch noch eine zu hohe Wärmekapazität, um eine genügend hohe Modulationsfrequenz der Strahlungsquelle selbst zu erlauben. Der bekannte Strahler benötigt zwar wegen seiner geringen Gesamtmasse und der geringen Wärmeleitung des Trägers wenig Energie für die Heizung, er ist jedoch kaum für eine Strahlungsmodulation durch beispielsweise gepulste Heizung geeignet, weil in den Heizpausen die Wärme aus der Strahlungszone nur langsam abgeführt wird. Eine Modulation der Strahlung erfordert also einen zusätzlichen, nachträglich in den Strahlengang angeordneten mechanischen Modulator.

Die Aufgabe vorliegender Erfindung wird darin gesehen, eine Strahlungsquelle für Infrarot-Strahlung der eingangs genannten Art so zu verbessern, dass die Wärmekapazität der Strahlungsquelle weiter verringert und die Wärmeableitung an ihre Umgebung vergrössert wird.

Diese Aufgabe wird dadurch gelöst, dass die Widerstandsschicht in einem verdünnten Bereich des Trägersubstrates angebracht ist.

Vorteilhafte Weiterbildungen sind in den Unteransprüchen gekennzeichnet.

Die erfindungsgemässe Ausbildung eines Infrarot-Strahlers besitzt den Vorteil, dass der Flächenstrahler eine so geringe Wärmekapazität besitzt, dass eine schnelle Modulation der Strahlungsquelle durch Änderung der Heizleistung in der Widerstandsschicht erzielt werden kann. Insbesondere sind Modulationsfrequenzen in der Grössenordnung von 100 Hz möglich.

Vorteilhafterweise wird die Modulierbarkeit des Strahlers noch weiter erhöht, wenn in dem verdünnten Bereich Durchbrüche angeordnet sind.

Die elektrische Widerstandsschicht wird zweckmässigerweise als eine in sich verschlungene, beispielsweise mäanderförmige Leiterbahn ausgestaltet.

Damit wird in vorteilhafter Weise die Leiterbahn zu einer flächigen Strahlungsquelle, wobei jedoch die Erwärmung der Leiterbahn durch den elektrischen Strom auf einen kleinen Raum begrenzt bleibt. Die Modulierbarkeit wird weiter verbessert, indem das Trägersubstrat, auf welchem die Leiterbahn angeordnet ist, aus Material hoher thermischer Leitfähigkeit besteht. Ein solches Material kann in weiterer Ausgestaltung der Erfindung Silizium sein. Eine zweckmässige Anordnung der die Infrarot-Strahlung abgebenden Substanz besteht darin, dass diese im verdünnten Bereich als eine zusätzliche Schicht aufgebracht ist. Dadurch ist eine deutliche Trennung zwischen der Wärmequelle in Gestalt der Leiterbahnen und der Strahlungsquelle in Gestalt der infrarot-aktiven Substanz gegeben. Infolgedessen wird zur Aufheizung der Emissions-Substanz lediglich die elektrisch gut leitfähige Leiterbahn benutzt, so dass die Wahl einer infrarot-aktiven Substanz unter den Gesichtspunkten eines optimalen Strahlers erfolgen kann, ohne dass gleichzeitig noch auf eine optimale elektrische Leitfähigkeit derselben Substanz geachtet werden muss.

Anhand der Figuren der Zeichnung wird ein Ausführungsbeispiel der Erfindung dargestellt und im folgenden näher beschrieben. Es zeigen

Fig. 1 die Draufsicht auf die Infrarot-Strahlungsquelle,

Fig. 2 einen Schnitt 2–2 durch die Strahlungsquelle.

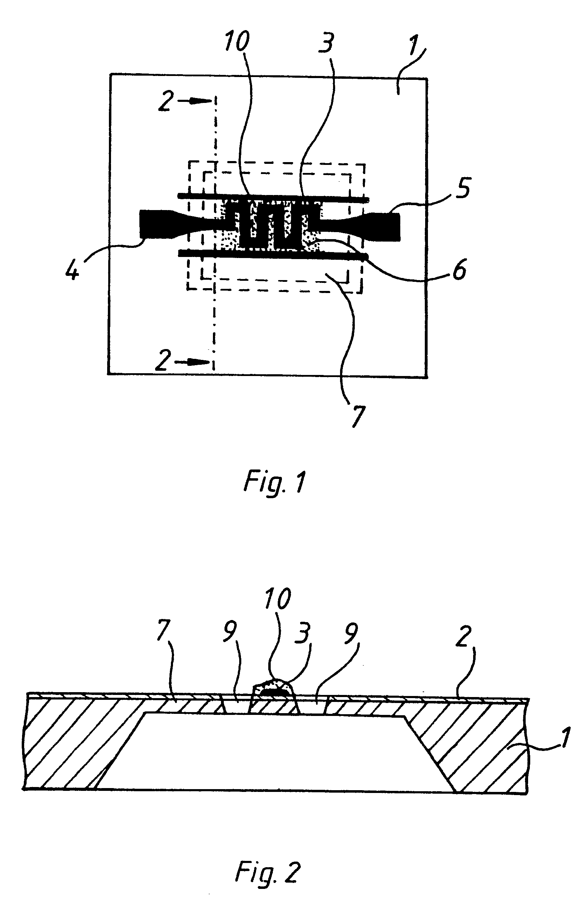

In Figur 1 ist ein plattenförmiges Trägersubstrat 1 aus Silizium von etwa 300 µm Dicke an seiner

Oberseite mit einer isolierenden Oxidschicht 2 überzogen. Im Mittelfeld ist auf dieser eine mit bekannten Verfahren aufgebrachte, mäanderförmige Leiterbahn 3 aus Platin zu einem Flächenstrahler 6 ausgebildet angeordnet. Ihre etwas verdickten Enden bilden die Anschlusskontakte 4, 5. Sie werden an eine in der Figur nicht dargestellte gepulste Stromversorgung angeschlossen. Die Leiterbahn 3 ist mit einer Substanz 10 aus Siliziumdioxid zur Emission der Infrarot-Strahlung bedeckt. Unterhalb der Leiterbahn 3 ist in einem sie umgebenden Bereich das Trägersubstrat 1 von der Rückseite her mit einem verdünnten Bereich 7 versehen, welcher in Form einer Membran von etwa 20 µm Dicke ausgebildet ist.

Der Schnitt in Figur 2 zeigt zusätzlich zu den schon dargestellten Einzelheiten die Durchbrüche 9, welche beiderseits der Leiterbahn 3 in dem verdünnten Bereich 7 angeordnet sind. Die Leiterbahn 3 mit ihrer Emissions-Substanz 10 befindet sich dadurch auf einer dünnen Brücke, welche bei Einschaltung des Heizstromes schnell mit geringer Leistung die zur Strahlungsabgabe erforderliche Temperatur erreicht. Wird der Heizstrom unterbrochen, erfolgt durch die gute Wärmeleitung des Trägermaterials in der Brücke eine schnelle Absenkung der Temperatur und Verminderung der Strahlung. Die dicken Randbereiche des Trägersubstrates 1 sichern die mechanische Robustheit des Strahlers.

## Patentansprüche

1. Strahlungsquelle für Infrarot-Strahlung mit einem Flächenstrahler, welcher auf einem Trägersubstrat aufgebracht ist, und mit einer elektrisch leitfähigen Widerstandsschicht welche als Heizelement auf dem Trägersubstrat angebracht ist, dadurch gekennzeichnet, dass die Widerstandsschicht (3) in einem verdünnten Bereich (7) des Trägersubstrates (1) angebracht ist.

2. Strahlungsquelle nach Anspruch 1, dadurch gekennzeichnet, dass der verdünnte Bereich (7) Durchbrüche (9) im Trägersubstrat (1) neben der Widerstandsschicht (3) aufweist.

3. Strahlungsquelle nach Anspruch 1 und 2, dadurch gekennzeichnet, dass eine Substanz (10) hohen Emissionsvermögens im verdünnten Bereich (7) auf das Trägersubstrat (1) und/oder die Widerstandsschicht (3) aufgebracht ist.

4. Strahlungsquelle nach Anspruch 1, dadurch gekennzeichnet, dass die Widerstandsschicht (3) eine in sich verschlungene Leiterbahn ist.

5. Strahlungsquelle nach Anspruch 1 bis 4, dadurch gekennzeichnet, dass das Trägersubstrat (1) im verdünnten Bereich (7) aus Material hoher thermischer Leitfähigkeit besteht.

6. Strahlungsquelle nach Anspruch 5, dadurch gekennzeichnet, dass das Material hoher thermischer Leitfähigkeit Silizium ist.

## Revendications

1. Source de rayonnement pour rayonnement infrarouge, avec un radiateur plan qui est appliqué sur un substrat porteur, et avec une couche de résistance électriquement conductrice qui est apposée comme élément de chauffage sur le substrat porteur, caractérisée en ce que la couche de résistance (3) est apposée dans une région amincie (7) du substrat porteur (1).

2. Source de rayonnement selon la revendication 1, caractérisée en ce que la région amincie (7) présente des ajours (9) dans le substrat porteur (1), à côté de la couche de résistance (3).

3. Source de rayonnement selon les revendications 1 et 2, caractérisée en ce qu'une substance (10) à pouvoir émissif élevé est appliquée dans la région amincie (7) sur le substrat porteur (1) et/ou la couche de résistance (3).

4. Source de rayonnement selon la revendication 1, caractérisée en ce que la couche de résistance (3) est une bande conductrice entrelacée sur elle-même.

5. Source de rayonnement selon les revendications 1 à 4, caractérisée en ce que le substrat porteur (1) est constitué dans la région amincie (7) d'un matériau à conductibilité thermique élevée.

6. Source de rayonnement selon la revendication 5, caractérisée en ce que le matériau à conductibilité thermique élevée est du silicium.

## Claims

1. Radiation source for infra-red radiation having a plane radiator which is applied to a carrier substrate, and having an electrically conductive resistance layer which is applied to the carrier substrate as a heating element, characterised in that the resistance layer (3) is applied in a thinned region (7) of the carrier substrate (1).

2. Radiation source according to claim 1, characterised in that the thinned region (7) has holes (9) in the carrier substrate (1) adjacent to the resistance layer (3).

3. Radiation source according to claims 1 and 2, characterised in that a substance (10) with a high radiating capacity is applied to the carrier substrate (1) and/or the resistance layer (3) in the thinned region (7)

4. Radiation source according to claim 1, characterised in that the resistance layer (3) is a sinuous conductive path.

5. Radiation source according to claims 1 to 4, characterised in that the carrier substrate (1) comprises in the thinned region (7) a material with a high thermal conductivity.

6. Radiation source according to claim 5, characterised in that the material with a high thermal conductivity is silicon.

111

Fig. 1

Fig. 2